# EUROPÄISCHE PATENTSCHRIFT

(11) **EP 2 574 820 B1**
(45) Veröffentlichungstag und Bekanntmachung des Hinweises auf die Patenterteilung: **16.04.2014**
(21) Anmeldenummer: 11183452.9
(22) Anmeldetag: 30.09.2011
(51) Int. Cl.: F16F 7/10, F16F 15/00

(54) **Bearbeitungsmaschine mit Schwingungskompensation beweglicher mechanischer Strukturen**
Processing machine with oscillation compensation of mobile mechanical structures
Machine de traitement dotée de structures mécaniques mobiles à compensation d'oscillations

(43) Veröffentlichungstag der Anmeldung: 03.04.2013
(73) Patentinhaber: Siemens Aktiengesellschaft, 80333 München (DE)
(72) Erfinder: Ladra, Uwe, 91056 Erlangen (DE); Schäfers, Elmar, 90763 Fürth (DE); Schür, Torsten, 91058 Erlangen (DE); Stoiber, Dietmar, 90763 Fürth (DE)

(56) Entgegenhaltungen:
- EP-A1- 0 685 779
- EP-A2- 1 803 967
- US-A1- 2003 090 645

## Beschreibung

Die vorliegende Erfindung betrifft ein Betriebsverfahren für eine Bearbeitungsmaschine, wobei ein Achsantrieb der Bearbeitungsmaschine von einer Steuereinrichtung der Bearbeitungsmaschine entsprechend einer Sollverfahrbewegung angesteuert wird, so dass eine mechanische Struktur der Bearbeitungsmaschine mittels des Achsantriebs entsprechend der Sollverfahrbewegung verfahren wird.

Die vorliegende Erfindung betrifft weiterhin ein Steuerprogramm, das Maschinencode umfasst, der von einer Steuereinrichtung für eine Bearbeitungsmaschine unmittelbar abarbeitbar ist, wobei die Abarbeitung des Maschinencodes durch die Steuereinrichtung bewirkt, dass die Steuereinrichtung die Bearbeitungsmaschine gemäß einem derartigen Betriebsverfahren betreibt.

Die vorliegende Erfindung betrifft weiterhin eine Steuereinrichtung für eine Bearbeitungsmaschine, wobei die Steuereinrichtung derart ausgebildet oder programmiert ist, dass sie die Bearbeitungsmaschine gemäß einem derartigen Betriebsverfahren betreibt.

Die vorliegende Erfindung betrifft weiterhin eine Bearbeitungsmaschine,
- wobei die Bearbeitungsmaschine einen Achsantrieb aufweist, der von einer Steuereinrichtung der Bearbeitungsmaschine entsprechend einer Sollverfahrbewegung ansteuerbar ist,
- wobei die Bearbeitungsmaschine eine mechanische Struktur aufweist, die mittels des Achsantriebs entsprechend der Sollverfahrbewegung verfahrbar ist.

Bei Bearbeitungsvorgängen an Werkzeugmaschinen, Industrierobotern usw. kommt es oftmals zu Schwingungen. Schwingungen führen zu Bearbeitungsungenauigkeiten. In manchen Fällen sind die Bearbeitungsungenauigkeiten tolerierbar. In anderen Fällen können die Bearbeitungsungenauigkeiten nicht toleriert werden. Insbesondere können die Schwingungen in manchen Fällen sogar so weit führen, dass die Bearbeitungsmaschine anfängt, zu rattern. In einem derartigen Fall muss beispielsweise mit einer geringeren Zustellung gearbeitet werden, wodurch die Produktivität verringert wird.

Die auftretenden Schwingungsformen können je nach Bearbeitungsmaschine unterschiedlicher Natur sein. Bei einem Ausleger beispielsweise kommt es oftmals zu einer typischen Biegeschwingung ("Rüsselbewegung"). Auch Linearschwingungen oder Torsionsschwingungen sind möglich.

Die Möglichkeiten, Schwingungen zu dämpfen, sind im Stand der Technik beschränkt. Im klassischen Maschinenbau werden beispielsweise passive Schwingungstilger verwendet. Passive Schwingungstilger sind Hilfsmassen, die federelastisch an der verfahrbaren mechanischen Struktur angebracht sind und auf die zu dämpfende Frequenz abgestimmt sind.

Im Stand der Technik ist weiterhin bekannt, zum Dämpfen von Schwingungen mechanischer Strukturen aktive Schwingungsdämpfer einzusetzen. Bei aktiven Schwingungsdämpfern wird mittels einer entsprechenden Sensorik eine Absolutbewegung der mechanischen Struktur im Raum ermittelt. Durch Auswertung der Absolutbewegung wird eine Kompensationsbewegung für eine Ausgleichsmasse ermittelt, welche die Schwingung der mechanischen Struktur dämpft. Ein auf die Ausgleichsmasse wirkender, auf der mechanischen Struktur angeordneter Ausgleichsantrieb wird entsprechend der ermittelten Kompensationsbewegung angesteuert, so dass die Ausgleichsmasse mittels des Ausgleichsantriebs relativ zur mechanischen Struktur entsprechend der Kompensationsbewegung verfahren wird.

US 2003/090645 A1 zeigt einen aktiven Dämpfer, in welchem die Bewegung der zu dämpfenden Masse direkt erfasst und in eine Steuereinheit eingespeisst wird, wobei die letztere die Grösse des erfassten Vibrationssignals verwendet, um eine Ausgleichsmasse mit einem Antrieb anzusteuern, um somit die auftretenden Vibrationen zu kompensieren.

Die bei aktiven Schwingungsdämpfern ergriffene typische Vorgehensweise ist bei mechanischen Strukturen, die - mehr oder minder permanent - verfahren werden, nicht ohne Weiteres anwendbar. Insbesondere würde der aktive Schwingungsdämpfer der gewünschten Sollverfahrbewegung entgegenwirken und diese daher erschweren.

Die Aufgabe der vorliegenden Erfindung besteht darin, Möglichkeiten zu schaffen, mittels derer auch Schwingungen verfahrbarer mechanischer Strukturen auf einfache Weise mittels eines aktiven Schwingungsdämpfers dämpfbar sind.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 8.

Erfindungsgemäß ist vorgesehen, ein Betriebsverfahren der eingangs genannten Art dadurch auszugestalten,
- dass von der Steuereinrichtung eine Absolutbewegung der mechanischen Struktur im Raum ermittelt wird,
- dass von der Steuereinrichtung zum Dämpfen einer Schwingung der mechanischen Struktur anhand der ermittelten Absolutbewegung unter Berücksichtigung der Sollverfahrbewegung der mechanischen Struktur eine Kompensationsbewegung für eine Ausgleichsmasse ermittelt wird und
- dass ein auf die Ausgleichsmasse wirkender, auf der mechanischen Struktur angeordneter Ausgleichsantrieb von der Steuereinrichtung entsprechend der ermittelten Kompensationsbewegung angesteuert wird, so dass die Ausgleichsmasse mittels des Ausgleichsantriebs relativ zur mechanischen Struktur entsprechend der Kompensationsbewegung verfahren wird.

Insbesondere durch die Berücksichtigung der Sollverfahrbewegung bei der Ermittlung der Kompensationsbewegung wird erreicht, dass die Kompensationsbewegung das normale, betriebsmäßige Verfahren der mechanischen Struktur nicht behindert, sondern ausschließlich die Dämpfung unerwünschter Schwingungen bewirkt.

Vorzugsweise wird die Kompensationsbewegung von der Steuereinrichtung anhand der Differenz einer Istbeschleunigung der mechanischen Struktur im Raum und einer mit der Sollverfahrbewegung der mechanischen Struktur korrespondierenden Sollbeschleunigung ermittelt. Durch diese Ausgestaltung ist die Berücksichtigung der Sollverfahrbewegung auf besonders einfache Weise möglich.

Um die Istbeschleunigung der mechanischen Struktur im Raum zu erlangen, ist zum einen möglich, dass von der Steuereinrichtung ein für die Istbeschleunigung der mechanischen Struktur im Raum charakteristisches Signal entgegen genommen wird. Durch diese Vorgehensweise steht die Istbeschleunigung direkt und unmittelbar zur Verfügung.

Alternativ ist es möglich, dass die Istbeschleunigung der mechanischen Struktur im Raum von der Steuereinrichtung anhand von von der Istbeschleunigung der mechanischen Struktur im Raum verschiedenen Messgrößen ermittelt wird. Bei dieser Ausgestaltung ist es nicht erforderlich, einen Beschleunigungssensor vorzusehen. Die verwendeten Messgrößen können in diesem Fall insbesondere Istgrößen des Ausgleichsantriebs und/ oder eine Lage der Ausgleichsmasse relativ zur mechanischen Struktur und/oder mindestens eine zeitliche Ableitung der Lage der Ausgleichsmasse relativ zur mechanischen Struktur umfassen. Beispielsweise können die Messgrößen zum einen den Iststrom oder das Istmoment des Ausgleichsantriebs und zum anderen die erste zeitliche Ableitung der Lage der Ausgleichsmasse relativ zur mechanischen Struktur umfassen.

Vorzugsweise ist vorgesehen, dass die Ausgleichsmasse von der Steuereinrichtung durch entsprechendes Ansteuern des Ausgleichsantriebs zusätzlich zur Kompensationsbewegung mit einer Überlagerungsbewegung relativ zur mechanischen Struktur verfahren wird. Durch diese Vorgehensweise kann erreicht werden, dass nichtlineare Reibungseffekte, welche störend in die Messgrößenerfassung eingehen, minimiert werden. Vorzugsweise ist die Überlagerungsbewegung derart bestimmt, dass zu jedem Zeitpunkt die erste, die zweite und/oder die dritte zeitliche Ableitung der Überlagerungsbewegung von Null verschieden sind.

Die Überlagerungsbewegung ist in der Regel eine oszillierende Bewegung. Ihr Hub kann nach Bedarf bestimmt sein. Ihre Frequenz ist in der Regel relativ niedrig.

Die Aufgabe wird weiterhin durch ein Steuerprogramm gemäß Anspruch 9 gelöst. Erfindungsgemäß bewirkt die Abarbeitung des Maschinencodes durch die Steuereinrichtung, dass die Steuereinrichtung die Bearbeitungsmaschine gemäß einem erfindungsgemäßen Betriebsverfahren betreibt.

Die Aufgabe wird weiterhin durch eine Steuereinrichtung mit den Merkmalen des Anspruchs 10 gelöst. Erfindungsgemäß ist die Steuereinrichtung derart ausgebildet oder programmiert, dass sie die Bearbeitungsmaschine gemäß einem erfindungsgemäßen Betriebsverfahren betreibt.

Die Aufgabe wird weiterhin durch eine Bearbeitungsmaschine mit den Merkmalen des Anspruchs 11 gelöst. Erfindungsgemäß ist vorgesehen, eine Bearbeitungsmaschine der eingangs genannten Art dadurch auszugestalten, dass auf der mechanischen Struktur ein auf eine Ausgleichsmasse wirkender Ausgleichsantrieb angeordnet ist, mittels dessen die Ausgleichsmasse relativ zur mechanischen Struktur verfahrbar ist und dass die Steuereinrichtung erfindungsgemäß ausgebildet oder programmiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen
- FIG 1: schematisch eine Bearbeitungsmaschine,
- FIG 2: schematisch ein Regelschema für einen Ausgleichsantrieb,
- FIG 3: schematisch einen internen Aufbau des Regelschemas von FIG 2 und
- FIG 4: einen möglichen Aufbau einer Beschleunigungsermittlung.

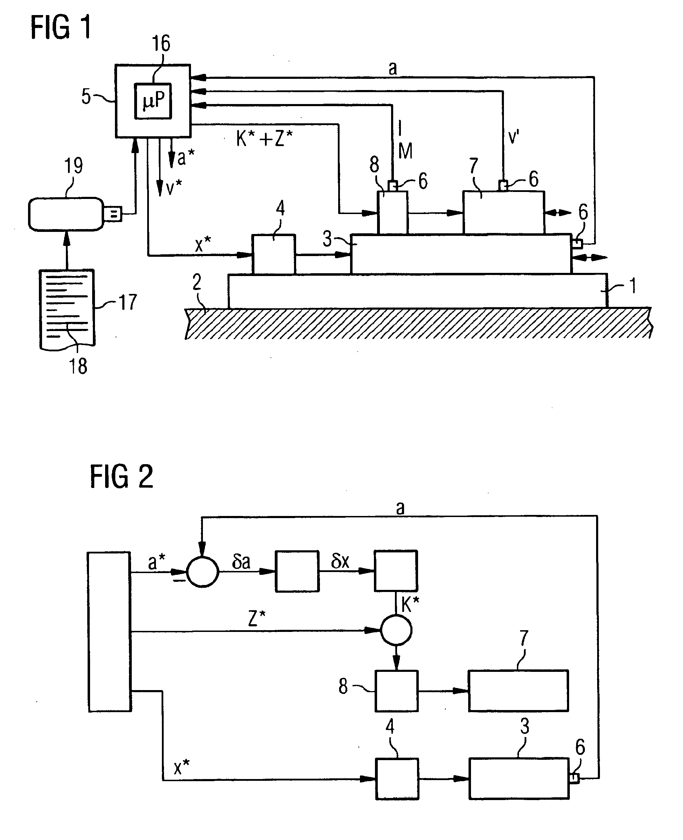

Gemäß FIG 1 weist eine Bearbeitungsmaschine - beispielsweise eine Werkzeugmaschine oder ein Industrieroboter - einen Grundkörper 1 auf. Der Grundkörper 1 ist in der Regel ortsfest auf einem Fundament 2 angeordnet.

Die Bearbeitungsmaschine weist weiterhin (mindestens) eine mechanische Struktur 3 auf. Die mechanische Struktur 3 ist mittels eines Achsantriebs 4 der Bearbeitungsmaschine entsprechend einer Sollverfahrbewegung verfahrbar. Beispielsweise kann der Achsantrieb 4 von einer Steuereinrichtung 5 der Bearbeitungsmaschine in einem Maschinentakt jeweils gemäß einem Lagesollwert x* (oder einem anderen Sollwert v*, a*, beispielsweise einem Geschwindigkeitssollwert v* oder einem Beschleunigungssollwert a*) angesteuert werden. Der Maschinentakt liegt in der Regel im niedrigen Millisekundenbereich oder darunter. Typisch ist ein Maschinentakt von 2 ms, 1 ms, 500 µs, 250 µs, 125 µs oder 62,5 µs.

Der Achsantrieb 4 verfährt die mechanische Struktur 3 entsprechend der vorgegebenen Sollverfahrbewegung. Weiterhin kann die mechanische Struktur 3 - sei es durch äußere Einflüsse, sei es durch das Verfahren als solches, sei es aufgrund anderer Umstände - zu einer Schwingung angeregt werden. Um derartige Schwingungen erkennen zu können, sind Sensoren 6 vorhanden. Mittels der Sensoren 6 werden messtechnisch Signale erfasst, welche für die Absolutbewegung der mechanischen Struktur 3 im Raum charakteristisch sind. Die von den Sensoren 6 erfassten Signale werden der Steuereinrichtung 5 zugeführt, welche daraus die Absolutbewegung der mechanischen Struktur 3 im Raum ermittelt.

Zum Dämpfen der Schwingungen der mechanischen Struktur 3 weist die Bearbeitungsmaschine weiterhin eine Ausgleichsmasse 7 und einen Ausgleichsantrieb 8 auf. Der Ausgleichsantrieb 8 ist auf der mechanischen Struktur 3 angeordnet. Er wirkt auf die Ausgleichsmasse 7. Der Ausgleichsantrieb 8 kann alternativ als rotatorische elektrische Maschine oder als elektrischer Linearantrieb ausgebildet sein, wobei letztere Ausgestaltung in manchen Fällen bevorzugt ist.

Mittels des Ausgleichsantriebs 8 ist die Ausgleichsmasse 7 relativ zur mechanischen Struktur verfahrbar. Die Steuereinrichtung 5 ermittelt daher anhand der zuvor ermittelten Absolutbewegung der mechanischen Struktur 3 im Raum unter Berücksichtigung der Sollverfahrbewegung der mechanischen Struktur 3 eine Kompensationsbewegung K*, gemäß derer die Ausgleichsmasse 7 bewegt werden soll. Die Steuereinrichtung 5 ermittelt die Kompensationsbewegung K* derart, dass eine aufgetretene Schwingung der mechanischen Struktur 3 gedämpft wird. Weiterhin steuert die Steuereinrichtung 5 den Ausgleichsantrieb 8 entsprechend der ermittelten Kompensationsbewegung K* an. Dadurch wird die Ausgleichsmasse 7 mittels des Ausgleichsantriebs 8 relativ zur mechanischen Struktur 3 entsprechend der Kompensationsbewegung K* verfahren, die Schwingung somit gedämpft.

Die Ausgleichsmasse 7 stützt sich jedoch, soweit es die durch die Kompensationsbewegung K* definierte Verfahrrichtung betrifft, nicht an der mechanischen Struktur 3 ab. Dies kann dadurch realisiert werden, dass die Ausgleichsmasse 7 sozusagen huckepack auf dem Ausgleichsantrieb 8 mitfährt. Alternativ kann die Ausgleichsmasse 7 relativ zur mechanischen Struktur 3 zwar orthogonal zur Verfahrrichtung geführt sein, beispielsweise über Führungsschienen. Auch in diesem Fall erfolgt jedoch keine direkte Kraftübertragung von der Ausgleichsmasse 7 zur mechanischen Struktur 3, d. h. unter Umgehung des Ausgleichsantriebs 8.

Die Ermittlung der Kompensationsbewegung K* für eine ruhende mechanische Struktur 3 ist Fachleuten allgemein bekannt. In der Regel erfolgt - siehe FIG 2 - ausgehend von einer resultierenden Beschleunigung δa eine Schätzung einer resultierenden Istlage δx der mechanischen Struktur 3. Ausgehend von dieser Schätzung wird sodann die Kompensationsbewegung K* ermittelt.

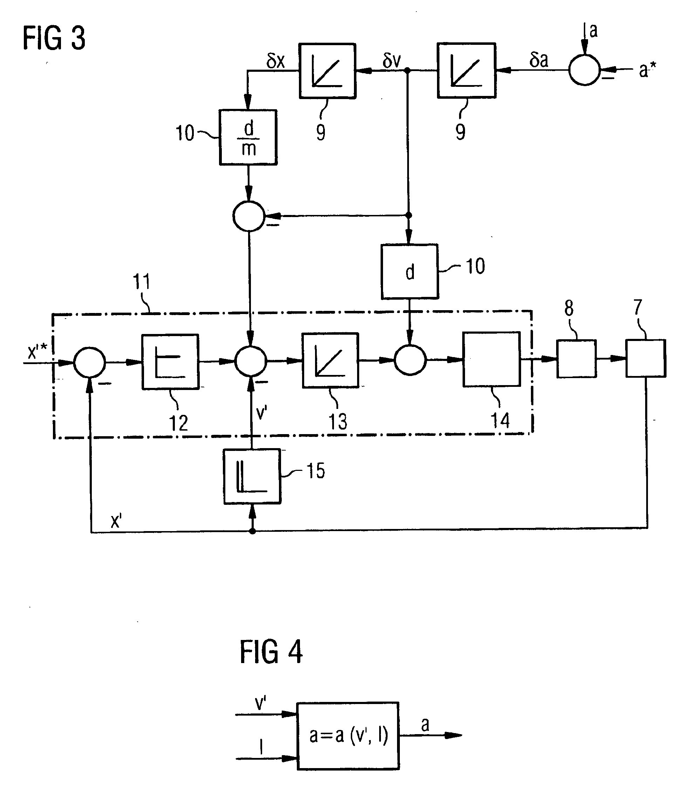

Beispielsweise kann - siehe FIG 3 - durch zweifache Integration in Integratoren 9 anhand der resultierenden Beschleunigung δa zunächst eine resultierende Geschwindigkeit δv und sodann die resultierende Istlage δx der mechanischen Struktur 3 ermittelt werden.

Die resultierende Geschwindigkeit δv und die resultierende Lage δx können in Skalierungsgliedern 10 mit geeigneten Skalierungsfaktoren skaliert werden. d steht in den Skalierungsgliedern 10 für eine gewünschte Dämpfung, m für die Masse (in kg) der Ausgleichsmasse 7.

Die entsprechend skalierten Größen können gemäß FIG 3 auf eine Reglerstruktur 11 aufgeschaltet werden, welche die Lage x' und die Geschwindigkeit v' der Ausgleichsmasse 7 relativ zur mechanischen Struktur 3 regelt. Die Reglerstruktur 11 weist intern einen Lageregler 12, einen Geschwindigkeitsregler 13 und eventuell einen Stromregler 14 auf. Die Reglerstruktur 11 wirkt auf den Ausgleichsantrieb 8. Als Istgrößen x', v' werden der Reglerstruktur 11 die Lage x' der Ausgleichsmasse 7 relativ zur mechanischen Struktur 3 und die entsprechende Geschwindigkeit v' zugeführt. Die Geschwindigkeit v' kann beispielsweise in einem Differenzierglied 15 durch Differenzieren der Lage x' ermittelt werden. Als Sollgröße x'* wird der Reglerstruktur 11 eine Solllage x'* zugeführt. Die Solllage x'* kann konstant oder zeitveränderlich sein.

Es ist möglich, die resultierende Beschleunigung δa oder aus der resultierenden Beschleunigung δa abgeleitete Größe einer Frequenzfilterung zu unterziehen. Eine derartige Frequenzfilterung ist Fachleuten allgemein bekannt. Sie ist in FIG 3 nicht mit dargestellt.

Die Ermittlung der Kompensationsbewegung K* anhand der resultierenden Beschleunigung δa kann auch bei der erfindungsgemäßen Bearbeitungsmaschine vom Ansatz her beibehalten werden. Allerdings ist es erforderlich, entsprechend der Darstellung der FIG 2 und 3 zur Ermittlung der resultierenden Beschleunigung δa die Sollbeschleunigung a* von einer Istbeschleunigung a der mechanischen Struktur 3 abzuziehen, also die Differenz der Istbeschleunigung a der mechanischen Struktur 3 und der Sollbeschleunigung a* der mechanischen Struktur 3 zu bilden. Die Sollbeschleunigung a* korrespondiert mit der Sollverfahrbewegung. Sie kann durch die Sollverfahrbewegung direkt und unmittelbar gegeben sein oder von der Steuereinrichtung 5 anhand der Sollverfahrbewegung ermittelt werden.

Bezüglich der Istbeschleunigung a der mechanischen Struktur 3 sind verschiedene Vorgehensweisen möglich. Zum einen ist es gemäß FIG 1 möglich, dass einer der Sensoren 6 auf der mechanischen Struktur 3 selbst angeordnet ist und als Beschleunigungssensor ausgebildet ist. Der Sensor 6 kann in diesem Fall die Istbeschleunigung a direkt und unmittelbar erfassen und sie der Steuereinrichtung 5 zuführen.

Zum anderen ist es möglich, dass die von den Sensoren 6 erfassten Messgrößen v', I, M von der Istbeschleunigung a der mechanischen Struktur 3 verschiedene Messgrößen v', I , M sind. In diesem Fall wird die Istbeschleunigung a von der Steuereinrichtung 5 anhand der erfassten Messgrößen v', I, M ermittelt.

Beispielsweise können zu diesem Zweck der Steuereinrichtung 5 mittels der Sensoren 6 geeignete Istgrößen I, M des Ausgleichsantriebs 8 und/oder die Lage x' der Ausgleichsmasse 7 relativ zur mechanischen Struktur 3 und/oder eine zeitliche Ableitung v' dieser Lage x' - insbesondere die erste zeitliche Ableitung v', d.h. die Geschwindigkeit v' - zugeführt werden. Die Istgrößen I, M des Ausgleichsantriebs 8 können insbesondere den Iststrom I oder das Istmoment M des Ausgleichsantriebs 8 umfassen. Beispielsweise kann die Steuereinrichtung 5 gemäß FIG 4 die Istbeschleunigung a der mechanischen Struktur 3 anhand des Istmoments M oder des Iststroms I des Ausgleichsantriebs 8 und der Geschwindigkeit v' der Ausgleichsmasse 7 relativ zur mechanischen Struktur 3 ermitteln. Weitere Größen werden zur Ermittlung der Istbeschleunigung a nicht benötigt.

Es ist möglich, dass die Steuereinrichtung 5 den Ausgleichsantrieb 8 ausschließlich entsprechend der Kompensationsbewegung K* ansteuert. Alternativ ist es - siehe FIG 1 - möglich, dass die Ausgleichsmasse 7 von der Steuereinrichtung 5 durch entsprechendes Ansteuern des Ausgleichsantriebs 8 zusätzlich mit einer Überlagerungsbewegung Z* relativ zur mechanischen Struktur 3 verfahren wird. Beispielsweise kann zu diesem Zweck der Lagesollwert x'* - siehe FIG 3 - entsprechend moduliert werden. Die Überlagerungsbewegung Z* ist vorzugsweise derart bestimmt, dass - bezogen auf die Überlagerungsbewegung Z* - zu jedem Zeitpunkt mindestens eine der folgenden Größen von 0 verschieden ist:
- Die erste zeitliche Ableitung, d.h. der durch die Überlagerungsbewegung Z* bewirkte Geschwindigkeitsanteil der Bewegung der Ausgleichsmasse 7 relativ zur mechanischen Struktur 3,
- die zweite zeitliche Ableitung, d.h. der durch die Überlagerungsbewegung Z* bewirkte Beschleunigungsanteil der Bewegung der Ausgleichsmasse 7 relativ zur mechanischen Struktur 3, und
- die dritte zeitliche Ableitung, d.h. der durch die Überlagerungsbewegung Z* bewirkte Ruckanteil der Bewegung der Ausgleichsmasse 7 relativ zur mechanischen Struktur 3.

In aller Regel ist die Überlagerungsbewegung Z* eine oszillierende Bewegung. Ihre Frequenz muss außerhalb des Resonanzspektrums der mechanischen Struktur 3 liegen, beispielsweise hinreichend niederfrequent sein.

Entsprechend der Darstellung von FIG 1 weist die Steuereinrichtung 5 intern in der Regel einen Mikroprozessor 16 auf. Die Steuereinrichtung 5 ist daher in der Regel als softwareprogrammierbare Steuereinrichtung ausgebildet, die das Computerprogramm 17 abarbeitet. Das Computerprogramm 17 umfasst Maschinencode 18, der von der Steuereinrichtung 5 (genauer: dem Mikroprozessor 16 der Steuereinrichtung 5) unmittelbar abarbeitbar ist. Die Abarbeitung des Maschinencodes 18 bewirkt, dass die Steuereinrichtung 5 die Bearbeitungsmaschine entsprechend dem obenstehend erläuterten erfindungsgemäßen Betriebsverfahren betreibt.

Das Computerprogramm 17 kann der Steuereinrichtung 5 auf beliebige Weise zugeführt werden. Beispielsweise kann das Computerprogramm 17 in maschinenlesbarer Form - insbesondere in elektronischer Form - auf einem Datenträger 19 gespeichert sein, und der Steuereinrichtung 5 über den Datenträger 19 zugeführt werden. Rein beispielhaft ist der Datenträger 19 gemäß FIG 1 als USB-Memory-Stick ausgebildet. Diese Ausgestaltung kann jedoch ohne Weiteres variiert werden.

Mittels der erfindungsgemäßen Ausgestaltungen ist auf einfache Weise eine Dämpfung von Schwingungen verfahrbarer mechanischer Strukturen 3 möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Bearbeitungsmaschine,
- wobei ein Achsantrieb (4) der Bearbeitungsmaschine von einer Steuereinrichtung (5) der Bearbeitungsmaschine entsprechend einer Sollverfahrbewegung angesteuert wird, so dass eine mechanische Struktur (3) der Bearbeitungsmaschine mittels des Achsantriebs (4) entsprechend der Sollverfahrbewegung verfahren wird,
- wobei von der Steuereinrichtung (5) eine Absolutbewegung der mechanischen Struktur (3) im Raum ermittelt wird,
- wobei von der Steuereinrichtung (5) zum Dämpfen einer Schwingung der mechanischen Struktur (3) anhand der ermittelten Absolutbewegung unter Berücksichtigung der Sollverfahrbewegung der mechanischen Struktur (3) eine Kompensationsbewegung (K*) für eine Ausgleichsmasse (7) ermittelt wird,
- wobei ein auf die Ausgleichsmasse (7) wirkender, auf der mechanischen Struktur (3) angeordneter Ausgleichsantrieb (8) von der Steuereinrichtung (5) entsprechend der ermittelten Kompensationsbewegung (K*) angesteuert wird, so dass die Ausgleichsmasse (7) mittels des Ausgleichsantriebs (8) relativ zur mechanischen Struktur (3) entsprechend der Kompensationsbewegung (K*) verfahren wird.

2. Betriebsverfahren nach Anspruch 1,
**dadurch gekennzeichnet, dass** die Kompensationsbewegung (K*) von der Steuereinrichtung (5) anhand der Differenz einer Istbeschleunigung (a) der mechanischen Struktur (3) im Raum und einer mit der Sollverfahrbewegung der mechanischen Struktur (3) korrespondierenden Sollbeschleunigung (a*) ermittelt wird.

3. Betriebsverfahren nach Anspruch 2,
**dadurch gekennzeichnet, dass** von der Steuereinrichtung (5) ein für die Istbeschleunigung (a) der mechanischen Struktur (3) im Raum charakteristisches Signal entgegen genommen wird.

4. Betriebsverfahren nach Anspruch 2,
**dadurch gekennzeichnet, dass** die Istbeschleunigung (a) der mechanischen Struktur (3) im Raum von der Steuereinrichtung (5) anhand von von der Istbeschleunigung (a) der mechanischen Struktur (3) im Raum verschiedenen Messgrößen (v', I, M) ermittelt wird.

5. Betriebsverfahren nach Anspruch 4,
**dadurch gekennzeichnet, dass** die Messgrößen (v', I, M) Istgrößen (I, M) des Ausgleichsantriebs (8) und/oder eine Lage (x') der Ausgleichsmasse (7) relativ zur mechanischen Struktur (3) und/oder mindestens eine zeitliche Ableitung (v') der Lage (x') der Ausgleichsmasse (7) relativ zur mechanischen Struktur (3) umfassen.

6. Betriebsverfahren nach Anspruch 5,
**dadurch gekennzeichnet, dass** die Messgrößen (v', I, M) zum einen den Iststrom (I) oder das Istmoment (M) des Ausgleichsantriebs (8) und zum anderen die erste zeitliche Ableitung (v') der Lage (x') der Ausgleichsmasse (7) relativ zur mechanischen Struktur (3) umfassen.

7. Betriebsverfahren nach Anspruch 5 oder 6,
**dadurch gekennzeichnet, dass** die Messgrößen (v', I, M) ausschließlich die in Anspruch 5 oder 6 genannten Größen umfassen.

8. Betriebsverfahren nach Anspruch 5, 6 oder 7,
**dadurch gekennzeichnet, dass** die Ausgleichsmasse (7) von der Steuereinrichtung (5) durch entsprechendes Ansteuern des Ausgleichsantriebs (8) zusätzlich zur Kompensationsbewegung (K*) mit einer Überlagerungsbewegung (Z*) relativ zur mechanischen Struktur (3) verfahren wird und dass zu jedem Zeitpunkt die erste, die zweite und/oder die dritte zeitliche Ableitung der Überlagerungsbewegung (Z*) von Null verschieden sind.

9. Steuerprogramm, das Maschinencode (18) umfasst, der von einer Steuereinrichtung (5) für eine Bearbeitungsmaschine unmittelbar abarbeitbar ist, wobei die Abarbeitung des Maschinencodes (18) durch die Steuereinrichtung (5) bewirkt, dass die Steuereinrichtung (5) die Bearbeitungsmaschine gemäß einem Betriebsverfahren mit allen Schritten eines Betriebsverfahrens nach einem der obigen Ansprüche betreibt.

10. Steuereinrichtung für eine Bearbeitungsmaschine, wobei die Steuereinrichtung derart ausgebildet oder programmiert ist, dass sie die Bearbeitungsmaschine gemäß einem Betriebsverfahren mit allen Schritten eines Betriebsverfahrens nach einem der Ansprüche 1 bis 8 betreibt.

11. Bearbeitungsmaschine,
- wobei die Bearbeitungsmaschine einen Achsantrieb (4) aufweist, der von einer Steuereinrichtung (5) der Bearbeitungsmaschine entsprechend einer Sollverfahrbewegung ansteuerbar ist,
- wobei die Bearbeitungsmaschine eine mechanische Struktur (3) aufweist, die mittels des Achsantriebs (4) entsprechend der Sollverfahrbewegung verfahrbar ist,
- wobei auf der mechanischen Struktur (3) ein auf eine Ausgleichsmasse (7) wirkender Ausgleichsantrieb (8) angeordnet ist, mittels dessen die Ausgleichsmasse (7) relativ zur mechanischen Struktur (3) verfahrbar ist,
- wobei die Steuereinrichtung (5) gemäß Anspruch 10 ausgebildet oder programmiert ist.

## Claims

1. Operating method for a processing machine,
- wherein an axle drive (4) of the processing machine is actuated by a control device (5) of the processing machine in accordance with a reference displacement movement such that a mechanical structure (3) of the processing machine is displaced by means of the axle drive (4) in accordance with the reference displacement movement,
- wherein an absolute movement of the mechanical structure (3) in space is determined by the control device (5),
- wherein a compensation movement (K*) for a compensating mass (7) is determined by the control device (5) on the basis of the determined absolute movement, taking into account the reference displacement movement of the mechanical structure (3), for the purpose of damping a vibration of the mechanical structure (3),
- wherein a compensating drive (8) arranged on the mechanical structure (3) and acting on the compensating mass (7) is actuated by the control device (5) in accordance with the determined compensation movement (K*) such that the compensating mass (7) is displaced relative to the mechanical structure (3) by means of the compensating drive (8) in accordance with the compensation movement (K*).

2. Operating method according to claim 1,
**characterised in that** the compensation movement (K*) is determined by the control device (5) on the basis of the difference between an actual acceleration (a) of the mechanical structure (3) in space and a reference acceleration (a*) corresponding to the reference displacement movement of the mechanical structure (3).

3. Operating method according to claim 2,
**characterised in that** a signal that is characteristic of the actual acceleration (a) of the mechanical structure (3) in space is received by the control device (5).

4. Operating method according to claim 2,
**characterised in that** the actual acceleration (a) of the mechanical structure (3) in space is determined by the control device (5) on the basis of measured variables (v', I, M) that are different from the actual acceleration (a) of the mechanical structure (3) in space.

5. Operating method according to claim 4,
**characterised in that** the measured variables (v', I, M) include actual variables (I, M) of the compensating drive (8) and/or a position (x') of the compensating mass (7) relative to the mechanical structure (3) and/or at least one time derivative (v') of the position (x') of the compensating mass (7) relative to the mechanical structure (3).

6. Operating method according to claim 5,
**characterised in that** the measured variables (v', I, M) include on the one hand the actual current (I) or the actual torque (M) of the compensating drive (8) and on the other hand the first time derivative (v') of the position (x') of the compensating mass (7) relative to the mechanical structure (3).

7. Operating method according to claim 5 or 6,
**characterised in that** the measured variables (v', I, M) comprise only the variables cited in claim 5 or 6.

8. Operating method according to claim 5, 6 or 7,
**characterised in that** in addition to the compensation movement (K*) the compensating mass (7) is displaced by the control device (5) by corresponding actuation of the compensating drive (8) by means of an overlay movement (Z*) relative to the mechanical structure (3) and **in that** at any instant in time the first, the second and/or the third time derivative of the overlay movement (Z*) are/is different from zero.

9. Control program comprising machine code (18) which is directly executable by a control device (5) for a processing machine, wherein the processing of the machine code (18) by the control device (5) causes the control device (5) to operate the processing machine in accordance with an operating method comprising all of the steps of an operating method according to one of the above claims.

10. Control device for a processing machine, wherein the control device is embodied or programmed in such a way that it operates the processing machine in accordance with an operating method comprising all of the steps of an operating method according to one of claims 1 to 8.

11. Processing machine,
- wherein the processing machine has an axle drive (4) which can be actuated by a control device (5) of the processing machine in accordance with a reference displacement movement,
- wherein the processing machine has a mechanical structure (3) which can be displaced by means of the axle drive (4) in accordance with the reference displacement movement,
- wherein there is arranged on the mechanical structure (3) a compensating drive (8) which acts on a compensating mass (7) and by means of which the compensating mass (7) can be displaced relative to the mechanical structure (3),
- wherein the control device (5) is embodied or programmed according to claim 10.

## Revendications

1. Procédé pour faire fonctionner une machine d'usinage,
- dans lequel on commande un entraînement ( 4 ) d'axe de la machine d'usinage par un dispositif ( 5 ) de commande de la machine d'usinage conformément à un mouvement de déplacement de consigne, de manière à ce qu'une structure ( 3 ) mécanique de la machine d'usinage soit déplacée au moyen de l'entraînement ( 4 ) d'axe conformément au mouvement de déplacement de consigne,
- dans lequel on détermine, par le dispositif ( 5 ) de commande, un déplacement absolu de la structure ( 3 ) mécanique dans l'espace,
- dans lequel on détermine, par le dispositif ( 5 ) de commande, pour l'amortissement d'une oscillation de la structure ( 3 ) mécanique, à l'aide du déplacement absolu déterminé et en tenant compte du mouvement de déplacement de consigne de la structure ( 3 ) mécanique, un mouvement ( K* ) de compensation pour une masselotte ( 7 ) de compensation,
- dans lequel on commande, conformément au mouvement ( K* ) de compensation déterminé, par le dispositif ( 5 ) de commande, un entraînement ( 8 ) de compensation agissant sur la masselotte ( 7 ) de compensation et monté sur la structure ( 3 ) mécanique, de manière à déplacer la masselotte ( 7 ) de compensation au moyen de l'entraînement ( 8 ) de compensation par rapport à la structure ( 3 ) mécanique conformément au mouvement ( K* ) de compensation.

2. Procédé suivant la revendication 1,
**caractérisé en ce qu'**on détermine le mouvement ( K* ) de compensation, par le dispositif ( 5 ) de commande, à l'aide de la différence entre une accélération ( a ) réelle de la structure ( 3 ) mécanique dans l'espace et une accélération ( a* ) de consigne correspondant au mouvement de déplacement de consigne de la structure ( 3 ) mécanique.

3. Procédé suivant la revendication 2,
**caractérisé en ce qu'**on reçoit, par le dispositif ( 5 ) de commande, un signal caractéristique de l'accélération ( a ) réelle de la structure ( 3 ) mécanique dans l'espace.

4. Procédé suivant la revendication 2,
**caractérisé en ce qu'**on détermine l'accélération ( a ) réelle de la structure ( 3 ) mécanique dans l'espace, par le dispositif ( 5 ) de commande, à l'aide de grandeurs ( v', I, M ) de mesure différentes de l'accélération ( a ) réelle de la structure ( 3 ) mécanique dans l'espace.

5. Procédé suivant la revendication 4,
**caractérisé en ce que** les grandeurs ( v', I, M ) de mesure comprennent des grandeurs ( I, M ) réelles de l'entraînement ( 8 ) de compensation et/ou une position ( x' ) de la masselotte ( 7 ) de compensation par rapport à la structure ( 3 ) mécanique et/ou au moins une dérivée ( v' ) en fonction du temps de la position ( x' ) de la masselotte ( 7 ) de compensation par rapport à la structure ( 3 ) mécanique.

6. Procédé suivant la revendication 5,
**caractérisé en ce que** les grandeurs ( v', I, M ) de mesure comprennent, d'une part, le courant ( I ) électrique réel ou le couple ( M ) réel de l'entraînement ( 8 ) de compensation et, d'autre part, la dérivée ( v' ) première en fonction du temps de la position ( x' ) de la masselotte ( 7 ) de compensation par rapport à la structure ( 3 ) mécanique.

7. Procédé suivant la revendication 5 ou 6,
**caractérisé en ce que** les grandeurs ( v', I, M ) de mesure comprennent exclusivement les grandeurs mentionnées dans la revendication 5 ou 6.

8. Procédé suivant la revendication 5, 6 ou 7,
**caractérisé en ce qu'**on déplace la masselotte ( 7 ) de compensation, par le dispositif ( 5 ) de commande, en commandant, d'une manière correspondante, l'entraînement ( 8 ) de compensation supplémentairement au déplacement ( K* ) de compensation par un déplacement ( Z* ) de superposition par rapport à la structure ( 3 ) mécanique et **en ce que**, à chaque instant, la dérivée première, deuxième et/ou troisième en fonction du temps du déplacement ( Z* ) de superposition est différente de zéro.

9. Programme de commande, qui comprend un code machine ( 18 ), qui peut se dérouler directement sous l'action d'un dispositif ( 5 ) de commande d'une machine d'usinage, le déroulement du code machine ( 18 ), s'effectuant par le dispositif ( 5 ) de commande, faisant que le dispositif ( 5 ) de commande fait fonctionner la machine d'usinage suivant un procédé de fonctionnement ayant tous les stades d'un procédé de fonctionnement suivant l'une des revendications précédentes.

10. Dispositif de commande d'une machine d'usinage, le dispositif de commande étant constitué ou programmé de façon telle qu'il fait fonctionner la machine d'usinage suivant un procédé de fonctionnement ayant tous les stades d'un procédé de fonctionnement suivant l'une des revendications 1 à 8.

11. Machine d'usinage,
- dans laquelle la machine d'usinage a un entraînement ( 4 ) d'axe, qui peut être commandé par un dispositif ( 5 ) de commande de la machine d'usinage conformément à un mouvement de déplacement de consigne,
- dans laquelle la machine d'usinage a une structure ( 3 ) mécanique, qui peut être déplacée au moyen de l'entraînement ( 4 ) d'axe conformément au mouvement de déplacement de consigne,
- dans laquelle, sur la structure ( 3 ) mécanique, est monté un entraînement ( 8 ) de compensation, qui agit sur une masselotte ( 7 ) de compensation et au moyen duquel la masselotte ( 7 ) de compensation peut être déplacée par rapport à la structure ( 3 ) mécanique,
- dans laquelle le dispositif ( 5 ) de commande est constitué ou programmé suivant la revendication 10.
